# EUROPÄISCHE PATENTSCHRIFT

(11) **EP 2 890 550 B1**
(45) Veröffentlichungstag und Bekanntmachung des Hinweises auf die Patenterteilung: **21.09.2016**
(21) Anmeldenummer: 13752843.6
(22) Anmeldetag: 15.07.2013
(51) Int. Cl.: B29C 70/54, B29C 35/02, E04C 5/07, B28B 23/00

(54) **VERFAHREN ZUR HERSTELLUNG VON BEWEHRUNGSELEMENTEN AUS FASERVERSTÄRKTEM KUNSTSTOFF SOWIE NACH DIESEM VERFAHREN HERGESTELLTE BEWEHRUNGSELEMENTE**
METHOD FOR PRODUCING REINFORCEMENT ELEMENTS FROM FIBRE-REINFORCED PLASTIC AND REINFORCEMENT ELEMENTS PRODUCED USING SAID METHOD
PROCÉDÉ DE FABRICATION D'ÉLÉMENTS D'ARMATURE EN MATIÈRE PLASTIQUE RENFORCÉE PAR DES FIBRES, ET ÉLÉMENTS D'ARMATURE FABRIQUÉS SELON LEDIT PROCÉDÉ

(30) Priorität: 31.08.2012 DE 102012108132
(43) Veröffentlichungstag der Anmeldung: 08.07.2015
(73) Patentinhaber: FIREP Rebar Technology GmbH, 40549 Düsseldorf (DE)
(72) Erfinder: TSUKAMOTO, Kenichi, 40667 Meerbusch (DE)
(74) Vertreter: Schrooten, Rolf
(86) Internationale Anmeldenummer: PCT/EP2013/064956
(87) Internationale Veröffentlichungsnummer: WO 2014/032846

(56) Entgegenhaltungen:
- EP-A2- 1 094 171
- US-A- 6 023 903
- US-A1- 2009 022 940

## Beschreibung

Die vorliegende Erfindung betrifft ein Verfahren zur Herstellung von aus faserverstärktem Kunststoff bestehenden Bewehrungselementen für mineralische Baustoffe, insbesondere für Beton, nach dem Oberbegriff von Anspruch 1. Dabei werden in an sich bekannter Weise eine Vielzahl von Fasern mit Kunststoff getränkt und in einer ersten Härtungsstufe durch Zufuhr von Wärme und/oder Strahlung bis zu einem bestimmten Grad zu einem Faserverbundstab vorgehärtet. Die Fasern können vorzugsweise aus Aramid, Basalt, Glas oder Carbon bestehen und als Kunststoff wird vorzugsweise ein heiß härtender Duroplast eingesetzt. Wenn der so erhaltene vorgehärtete Faserverbundstab länger ist als die für das Bewehrungselement benötigte Länge, wird er auf die erforderliche Länge abgelängt und danach zur Herstellung von Formteilen wie z.B. Bügel oder Haken in die für das Bewehrungselement gewünschte Form gebracht. Abschließend wird der umgeformte Faserverbundstab in einer abschließenden Härtungsstufe durch Zufuhr von Wärme und/oder Strahlung ausgehärtet, wobei das Aushärten auch direkt in einem beheizbaren formgebenden Werkzeug erfolgen kann.

Dieses Verfahren ist ebenso wie der Einsatz von Bewehrungselementen aus Faserverbundwerkstoffen allgemein bekannt. Aufgrund ihres geringeren Gewichts und der geringeren Kosten sowie vor allem aufgrund der nicht vorhandenen Korrosionsanfälligkeit werden Bewehrungselemente aus faserverstärktem Kunststoff zunehmend anstelle herkömmlicher Stahlbewehrung für Bauteile oder Bauwerke aus Beton eingesetzt. Dabei können die Bewehrungselemente aus einem einzigen Faserverbundstab geformt sein oder aus mehreren miteinander verbundenen Faserverbundstäben bestehen. Derartige stabförmige Bewehrungs- bzw. Armierungselemente sowie Verfahren zu ihrer Herstellung sind beispielsweise in der DE 101 08 357 A1, DE 102 13 153 A1, DE 20 2006 017 392 U1 oder in der DE 10 2009 054 894 A1 beschrieben. Bezüglich weiterer Einzelheiten kann insofern auf diese Druckschriften verwiesen werden.

So ist aus der DE 101 08 357 A1 ein Armierungsstab für mineralische Baustoffe, insbesondere für Beton, sowie ein Verfahren zu dessen Herstellung bekannt. Der Armierungsstab besteht aus einem langgestreckten Strang aus faserverstärktem Kunststoff, wobei die Verstärkungsfasern als Längsfasern ausgebildet sind und ununterbrochen entlang dem Strang verlaufen.

Aus der DE 102 13 153 A1 ist ein Bewehrungsstab aus faserverstärktem Kunststoff für den Betonbau sowie ein Verfahren zu seiner Herstellung nach dem Pultrusionsverfahren bekannt. Dabei wird das Kunststoffprofil unter Verwendung einer aus Kunststoff bestehenden verlorenen Schalung gefertigt.

Auch aus der DE 20 2006 017 392 U1 sind verschiedene Bauteile aus faserverstärktem Kunststoff als Bewehrung von Körpern aus mineralischen, hydraulisch härtenden Gemischen wie Beton bekannt.

Aus der DE 10 2009 054 894 A1 ist ein Verfahren zur Herstellung von Faserverbundstrukturen bekannt, bei dem eine Faserstruktur mit Harz imprägniert wird und einen Faserverbund ausbildet, der zunächst in ein Halbzeug vorgeformt und abschließend durch direkte Energieeinbringung mittels Mikrowelle in eine endgültige Gestalt umgeformt wird.

Weiterhin ist im Bereich der Luft- und Raumfahrt aus der US 2009/0022940 A1 ein Verfahren zur Herstellung einer gefalteten Kern-Struktur bekannt. Dabei werden halbfertige, vor-imprägnierte und nur teilgehärtete Faserverbundkomponenten verwendet, die in vorbestimmten Bereichen durch gezieltes Aufbringen von Hitze ausgehärtet werden. In den noch nicht ausgehärteten Bereichen können die Faserverbundkomponenten danach noch weiter verformt werden.

Aus der EP 1 094 171 A2 ist ein Verfahren zur Herstellung eines aus faserverstärktem Kunststoff bestehenden Bewehrungselements für mineralische Baustoffe, insbesondere für Beton, nach dem Oberbegriff von Anspruch 1 bekannt.

Von Nachteil bei allen bisher bekannten Herstellungsverfahren ist jedoch, dass die mechanischen und/oder chemischen und/oder geometrischen Eigenschaften der Bewehrungselemente in umgeformten Bereichen nicht mit den Eigenschaften der Bereiche übereinstimmen, die nach der in der ersten Stufe durchgeführten Vorhärtung nicht mehr umgeformt werden. So verändert sich gegenüber dem geraden Stabmaterial durch die Umformung beispielsweise die Querschnittsform, der Fasergehalt, die Ausrichtung der Fasern, das Harz-Faser-Verhältnis und/oder die Festigkeit gegenüber Zug-, Biege- oder Scherbeanspruchungen. Deshalb können Elemente mit umgeformten Bereichen für Bewehrungsanwendungen nicht direkt angewendet werden, sondern die Formteile mit umgeformten Bereichen müssen als eigenständiges Material getrennt von geradem Stabmaterial geprüft, bemessen und zertifiziert werden. Hiermit sind nicht nur ein erhöhte Aufwand, sondern vor allem auch höhere Kosten verbunden.

Aufgabe der vorliegenden Erfindung ist es daher, ein Verfahren der eingangs genannten Art zu schaffen, welches die genannten Nachteile vermeidet und die Herstellung von Bewehrungselementen aus faserverstärktem Kunststoff erlaubt, die auch in umgeformten Bereichen die geforderten Mindesteigenschaften bezüglich Festigkeit, E-Modul, Verbundverhalten und Dauerhaftigkeit zumindest annähernd so gut erfüllen, wie in nicht verformten Bereichen.

Diese Aufgabe wird erfindungsgemäß durch ein Herstellungsverfahren nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die Härtung des Faserverbundstabs in mindestens drei nacheinander ablaufenden Härtungsstufen erfolgt, wobei nach der ersten Härtungsstufe über einzelne axiale Abschnitte des vorgehärteten Faserverbundstabs Abdeckmittel mit strahlungsreflektierenden und/oder wärmeisolierenden Eigenschaften aufgebracht werden, die den Faserverbundstab in den einzelnen Abschnitten jeweils über einen Teilbereich seines Umfangs oder über seinen gesamten Umfang abdecken. Zusammen mit diesen abschnittsweise aufgebrachten Abdeckmitteln wird dann eine zweite Härtungsstufe des Faserverbundstabs durchgeführt, in welcher der Faserverbundstab durch Zufuhr von Wärme und/oder Strahlung in den nicht von Abdeckmitteln abgedeckten Bereichen weiter härtet. Wesentlich ist es dabei außerdem, dass das Verformen des Faserverbundstabs zwischen der zweiten Härtungsstufe und der abschließenden Härtungsstufe erfolgt.

Wichtig ist also, dass ein zusätzlicher Zwischenschritt zur Härtung des Faserverbundstabs vorgesehen wird, in dem mindestens ein einzelner Bereich des zuvor nur vorgehärteten Faserverbundstabs weiter gehärtet wird als andere Bereiche. Dabei wird der Faserverbundstab in der zusätzlich durchgeführten zweiten Härtungsstufe nur in den neben oder zwischen den aufgebrachten Abdeckmitteln freiliegenden Bereichen weiter gehärtet. Hierdurch kann der Faserverbundstab vor der Verformung einzelner Abschnitte in ein Zwischenprodukt mit unterschiedlichen Härtungsgraden überführt werden, welches bezüglich möglichst weitgehender Konstanz der mechanischen und chemischen Eigenschaften eine deutlich verbesserte Umformung erlaubt.

Vorteilhafterweise wird der bereits vorgehärtete Faserverbundstab nur in den Bereichen verformt, die in der zweiten Härtungsstufe von einem Abdeckmittel abgedeckt waren. Auf diese Weise wird erreicht, dass die an einen umzuformenden Bereich angrenzenden geraden Stababschnitte in der zusätzlich ausgeführten zweiten Härtungsstufe weiter oder sogar vollständig durchgehärtet sind und bei der anschließenden Verformung der dazwischenliegenden Abschnitte keine wesentliche Veränderung ihrer Eigenschaften mehr erfahren.

Ein wesentlicher Vorteil des erfindungsgemäßen Verfahrens besteht darin, dass auf diese Weise ein Vorprodukt entsteht, welches vor der Aushärtung durch Formgebung unmittelbar weiter verarbeitet werden kann zu unterschiedlichen Bewehrungselementen, die in verschiedenen Bewehrungsanwendungen benötigt werden. So können beliebig geformte Bewehrungselemente, insbesondere offene oder geschlossene Bügel hergestellt werden, die über ihre gesamte Erstreckung auch in den umgeformten Bereichen zumindest nahezu gleichbleibende Eigenschaften wie die vergleichbaren geraden Stabmaterialien aufweisen. Dazu gehören beispielsweise konstante Profilgebung, konstante Rundheit, konstanter Fasergehalt und konstante mechanische und/oder chemische Eigenschaften.

Die Abdeckmittel können als mechanisch wirkende Mittel und/oder vorzugsweise in flüssiger oder pastöser Form auf den vorgehärteten Faserverbundstab aufgebracht werden.

So können die Abdeckmittel beispielsweise wärmereflektierende und/oder strahlungsreflektierende, vorgeformte Profilteile mit einer konkaven Ausnehmung umfassen, in denen die einzelnen Abschnitte des vorgehärteten Faserverbundstabs vorzugsweise formschlüssig einliegen.

Ebenso können die Abdeckmittel eine wärmereflektierende und/oder strahlungsreflektierende Folie, insbesondere Alufolie umfassen, die um die einzelnen Abschnitte des vorgehärteten Faserverbundstabs gewickelt wird.

Bei diesen Abdeckmitteln ist es vorteilhaft, wenn sie nach dem Durchführen der zweiten Härtungsstufe zumindest teilweise wieder von dem Faserverbundstab entfernt werden.

Besonders vorteilhaft ist es, wenn die Abdeckmittel Farbe oder Lack umfassen, die bzw. der als wärmereflektierender und/oder strahlungsreflektierender Überzug auf die einzelnen Abschnitte des vorgehärteten Faserverbundstabs aufgebracht wird. Hierdurch kann eine besonders leichte und schnelle Anbringung der Abdeckmittel erreicht werden.

Besonders einfach kann das Abdeckmittel dabei aufgebracht werden, indem ein Lack mit Metallpigmenten, beispielsweise Silberbronze auf die jeweiligen Abschnitte des vorgehärteten Faserverbundstabs aufgesprüht wird. Ein derartiger Lack eignet sich besonders gut als Reflektionsmittel.

Eine weitere Möglichkeit besteht darin, dass die Abdeckmittel eine gel-artige oder wachs-artige Beschichtung umfassen, die als wärmereflektierender und/oder strahlungsreflektierender Überzug auf die einzelnen Abschnitte des vorgehärteten Faserverbundstabs aufgebracht wird.

Die vorgenannten Abdeckmittel können dabei jeweils alternativ oder auch in Kombination miteinander eingesetzt werden.

Gemäß einer besonders bevorzugten Ausführungsform der Erfindung ist vorgesehen, dass als Abdeckmittel ein Reflektionsmittel auf den Faserverbundstab aufgebracht wird, das strahlungsreflektierende und wärmedurchlässige Eigenschaften besitzt. Dabei wird der Faserverbundstab in der zweiten Härtungsstufe durch Einbringung von Strahlungsenergie, vorzugsweise in der Form von IR-Strahlung, weiter gehärtet, wobei die Strahlung in den von strahlungsreflektierenden Reflektionsmitteln abgedeckten Bereichen reflektiert wird, so dass der Faserverbundstab nur in den freiliegenden Bereichen weiter härtet. Danach wird der Faserverbundstab bei der abschließenden Härtungsstufe nicht durch Strahlung, sondern unter Zufuhr von beispielsweise in einem Ofen erzeugter Wärme ausgehärtet, wobei diese Wärmeenergie durch das zuvor aufgebrachte strahlungsreflektierende und wärmedurchlässige Reflektionsmittel hindurchgeht, so dass der Faserverbundstab auch in den von Reflektionsmitteln abgedeckten Bereichen vollständig aushärten kann. Diese Ausführungsvariante bietet den Vorteil, dass die für die zweite Härtungsstufe aufgebrachten Reflektionsmittel auch bei der abschließenden Härtungsstufe auf dem Faserverbundstab verbleiben können und nicht in einem separaten Schritt wieder entfernt werden müssen, was den Aufwand und die Kosten deutlich reduziert.

Eine besonders guter Halt des Bewehrungselements in Beton kann dadurch erreicht werden, dass die Oberfläche des vorgehärteten Faserverbundstabs in an sich bekannter Weise profiliert wird. Günstig ist es bei dem erfindungsgemäßen Verfahren, wenn diese Profilierung vor dem Aufbringen der Abdeckmittel erfolgt. Alternativ kann der fertig ausgehärtete Faserverbundstabs beispielsweise durch Schleifen oder Fräsen mechanisch bearbeitet werden.

Besonders vorteilhaft ist es dabei, wenn mindestens ein Faserstrang in an sich bekannter Weise um den vorgehärteten Faserverbundstab gewickelt wird, so dass die Oberfläche des Faserverbundstabs eingeschnürte Bereiche mit dazwischen liegenden aufgeworfenen Rippen aufweist. Dabei kann der Faserstrang vorteilhafter derart um den vorgehärteten Faserverbundstab gewickelt werden, dass sich eine gewindeförmige Oberflächenstruktur ergibt. So weisen die Bewehrungselemente eine außenseitige Gestaltung auf, die in der Form eines bedarfsweise schraubbaren Profils ausgebildet ist. Vorteilhafterweise kann der stramm um den Faserverbundstab gewickelte Faserstrang auch nach dem Aushärten am Boden der Gewindegänge auf dem Stab verbleiben. Auch diese Profilierung bleibt bei Anwendung des erfindungsgemäßen Verfahrens in den umgeformten Bereichen zumindest nahezu unverändert erhalten, so dass die Anforderungen an das Verbundverhalten in Beton auch in gebogenen Bereichen eines Bewehrungselements problemlos erfüllt werden.

Auch kann die Oberfläche des Faserverbundstabs mit Pulver oder Sand beschichtet werden, um den Halt des Bewehrungselements in einem mineralischen Baustoff zu verbessern.

Gemäß einer besonders bevorzugten Ausführungsform der Erfindung ist vorgesehen, dass das Bewehrungselement aus einem durch Pultrusion erzeugten Faserverbundstab gefertigt wird, der endlos hergestellt und vor dem Umformen auf die für die jeweiligen Bewehrungselemente gewünschte Länge abgelängt wird. Dabei wird die zweite Härtungsstufe mit den abschnittsweise auf den endlos laufenden Faserverbundstab aufgebrachten Abdeckmitteln durchlaufen. Auf diese Weise kann eine besonders wirtschaftliche Produktion erzielt werden, bei der auch die nachträglich noch zu verformenden Bereiche des endlos laufenden Faserverbundstabs den gesamten Prozess durchlaufen.

Von besonderem Vorteil ist hierbei, dass kontinuierlich Zwischenprodukte erzeugt werden, die unter Beibehaltung der geometrischen, mechanischen und/oder chemischen Eigenschaften besonders leicht zu unterschiedlichen Bewehrungselementen geformt werden können. Auch können durch geeignetes Aufbringen bzw. Takten der Abdeckmittel auf den kontinuierlich durchlaufenden Faserverbundstab in einem einzigen Prozess sowohl fertig ausgehärtete Stabelemente als auch noch teilweise oder vollständig umzuformende Zwischenprodukte fortlaufend bzw. abwechselnd hintereinander hergestellt werden. Für ein fertig ausgehärtetes Stabelement wird dabei über einen dessen Länge entsprechenden Bereich kein Abdeckmittel aufgebracht, während für ein unmittelbar davor und/oder dahinter liegendes, später noch zu einem Bewehrungselement teilweise umzuformenden Zwischenprodukt an den entsprechenden Stellen Abdeckmittel aufgebracht, vorzugsweise aufgesprüht werden. Ebenso können in diesem kontinuierlich laufenden Prozess auch Zwischenprodukte hergestellt werden, die über ihre gesamte Länge mit Abdeckmittel versehen werden und somit über ihre gesamte Länge noch für spätere Umformungen verformbar bleiben. Das stellt vor allem deshalb einen großen Vorteil dar, weil duroplastische Harze nach der Aushärtung nicht mehr durch nachträglich Erwärmung erweicht und nochmals umgeformt werden können.

Vorteilhafterweise erfolgt das Ablängen und das Verformen der Faserverbundstababschnitte des kontinuierlich im Pultrusionsverfahren erzeugten Faserverbundstabs zwischen der zweiten Härtungsstufe und der abschließenden Härtungsstufe. Die auf die gewünschte Länge gebrachten Faserverbundstababschnitte können dann für das Bewehrungselement in den zuvor durch Abdeckmittel abgedeckten Bereichen zweidimensional oder dreidimensional umgeformt werden.

Gegenstand der vorliegenden Erfindung ist auch ein Bewehrungselement aus faserverstärktem Kunststoff für mineralische Baustoffe, insbesondere für Beton, das nach dem vorangehend beschriebenen Verfahren hergestellt ist.

Gemäß einer bevorzugten Ausführungsform ist das Bewehrungselement in der Form eines Bügels mit mindestens einem umgeformten Biegebereich ausgeführt. Vorzugsweise hat ein derartiger Bügel zwei in einer Ebene liegende Biegebereiche, in denen der Faserverbundstab jeweils mit einem gewünschten Radius, der insbesondere zwischen dem 1,5-fachen und 5-fachen seines Durchmessers liegen kann, zumindest in etwa um 90° gebogen ist. Auch in diesen Eckbereichen weist der Bügel dabei gegenüber seinen geraden Stababschnitten zumindest annähernd unveränderte Eigenschaften, insbesondere eine konstante Gewindestruktur auf.

Weitere Vorteile und Merkmale der Erfindung ergeben sich aus der nachfolgenden Beschreibung und dem in der Zeichnung dargestellten Ausführungsbeispiel eines erfindungsgemäßen Verfahrensablaufs.

Es zeigen:

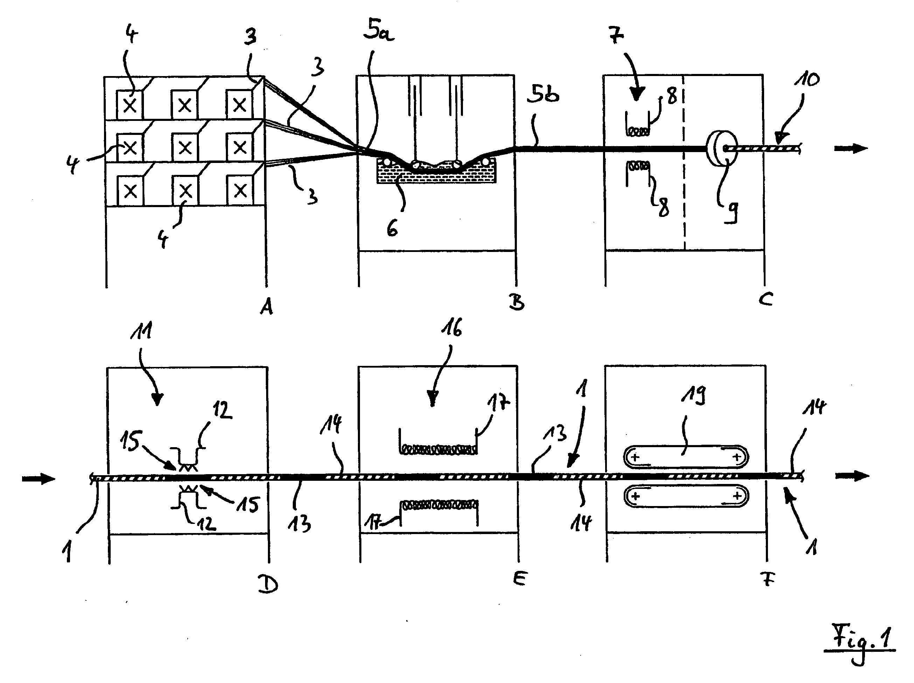

- Figur 1:: schematische Darstellung von sechs Prozess-Schritten A bis F eines erfindungsgemäßen Herstellungsverfahrens,
- Figur 2:: vergrößerte Darstellung der Schritte D und E aus Figur 1, und

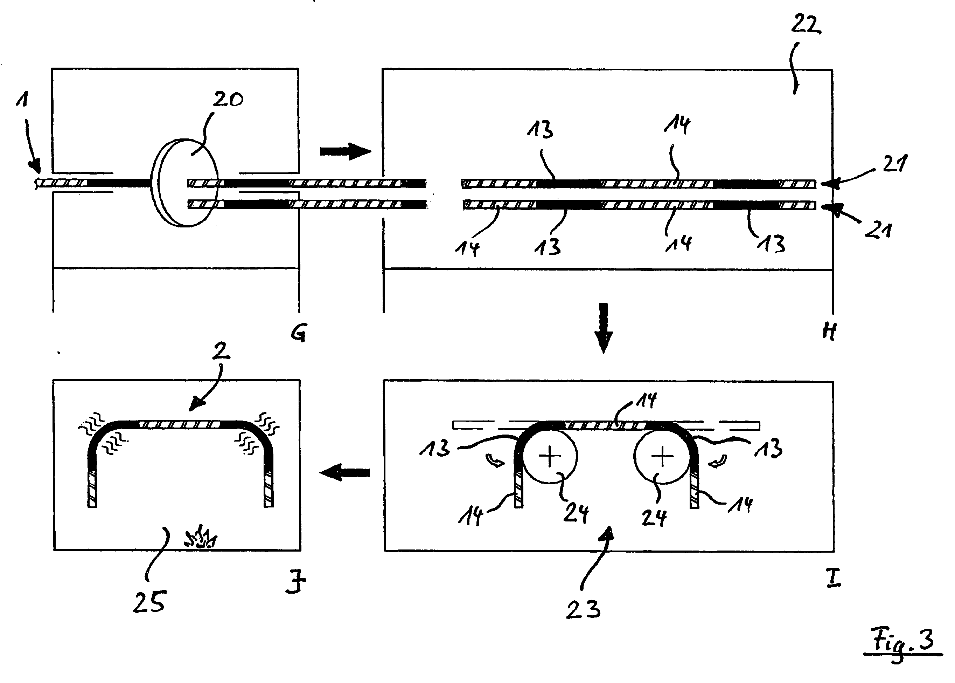

- Figur 3:: schematische Darstellung von vier weiteren Prozess-Schritten G bis J des Herstellungsverfahrens aus Figur 1.

Bei dem in den Zeichnungen dargestellten erfindungsgemäßen Verfahren wird ein Faserverbundstab 1 kontinuierlich durch Pultrusion hergestellt, aus dem später einzelne Bewehrungselemente 2 erzeugt werden. Dazu werden in an sich bekannter Weise zahlreiche Fasern 3, die als Rovings aus vielen Filamenten auf mehreren Spulen 4 aufgewickelt sind (Schritt A), zusammengeführt und als Faserbündel 5a mit in Längsrichtung des Stabprofils verlaufender unidirektionaler Faserorientierung in einem Kunststoffbad 6 getränkt (Schritt B). Als Fasern können beispielsweise Glasfasern, Aramidfasern, Carbonfasern, Siliciumcarbidfasern oder Borfasern eingesetzt werden, die in dem Kunststoffbad 6 mit einer Matrix aus Kunststoffharz umgeben werden.

Das so erhaltene, noch weiche und mit flüssigem Harz imprägnierte Faserbündel 5b durchläuft anschließend eine erste Härtungsstufe 7, in der es durch Zufuhr von Wärme mittels einer Strahlungsheizung 8 zu einem Faserverbundstab 1 vorgehärtet wird (linke Seite von Schritt C). Dieser Faserverbundstab 1 ist nur soweit vorgehärtet, dass er nicht mehr tropfnass ist und noch leicht umgeformt werden kann. Unmittelbar anschließend wird die Oberfläche des Faserverbundstabs 1 mit einem in einer quer zur Stablängsrichtung verlaufenden Ebene kontinuierlich umlaufenden Faserstrang 9 stramm umwickelt, so dass er eine gewindeartige Oberflächenstruktur 10 erhält (rechte Seite von Schritt C).

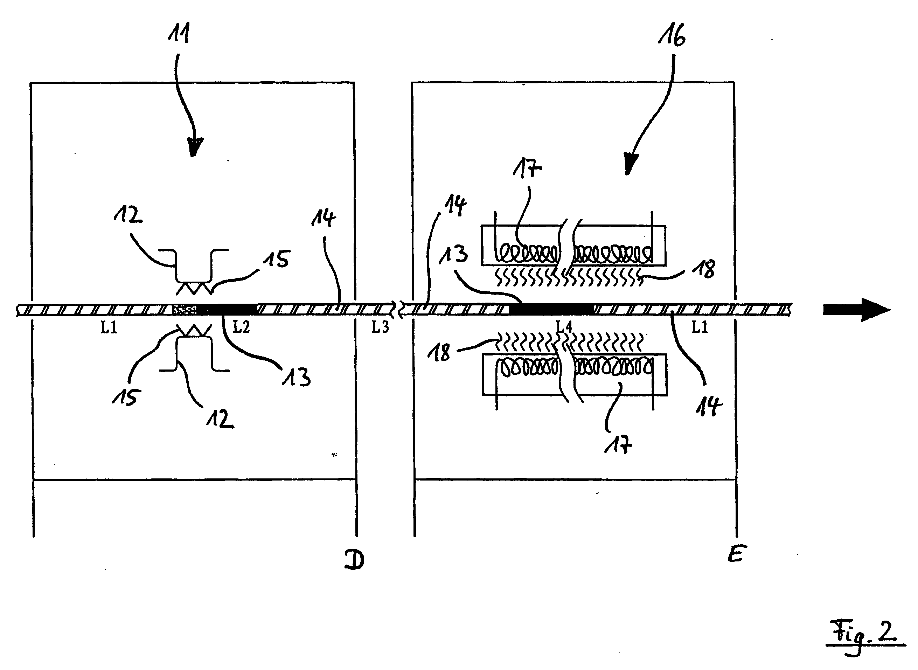

Der kontinuierlich vorlaufende Faserverbundstab 1 erhält anschließend in einer Lackierungskammer 11 eine abschnittsweise Beschichtung aus strahlungsreflektierender Silberbronze. Die Silberbronze wird dazu mittels einer von einer Steuereinrichtung gesteuerten Sprüheinrichtung 12 in einzelnen axialen Abschnitten 13 über jeweils den gesamten Umfang des Faserverbundstabs 1 aufgesprüht. Zwischen diesen besprühten Abschnitten 13 werden jeweils einzelne Abschnitte 14 ausgespart, die nicht mit Silberbronze überzogen sind (Schritt D). Durch die Steuereinrichtung können dabei die Abfolge und die axialen Längen L1, L2, L3 und L4 der einzelnen Abschnitte 13 und 14 automatisch gesteuert werden (Figur 2).

Die auf die Abschnitte 13 des kontinuierlich vorlaufenden Faserverbundstabs 1 aufgebrachte Silberbronze dient als Reflektionsmittel 15, welches die Strahlungsenergie reflektiert, die in der erfindungsgemäß zusätzlich durchlaufenen zweiten Härtungsstufe 16 dem Faserverbundstab 1 mittels einer Infrarot-Heizeinrichtung 17 durch Infrarotstrahlung 18 zugeführt wird. Die IR-Strahlung wird also in den mit Silberbronze beschichteten Abschnitten 13 reflektiert, so dass der Faserverbundstab 1 nur in den dazwischen liegenden Abschnitten 14, die frei von Silberbronze sind, weiter härten oder sogar fertig härten kann (Schritt E). Nach Ausführung dieser zweiten Härtungsstufe 16 hat der kontinuierlich laufende Faserverbundstab 1 also abwechselnd harte Bereiche 14 und weiche Bereiche 13 die noch umgeformt werden können.

Hinter der zweiten Härtungsstufe 16 ist in dem dargestellten Ausführungsbeispiel die Zugeinrichtung 19 angeordnet, die den Faserverbundstab 1 in an sich bekannter Weise als Traktor kontinuierlich durch die einzelnen Prozess-Stationen zieht (Schritt F).

Hinter der Zugeinrichtung 19 befindet sich eine ebenfalls von einer Steuereinrichtung gesteuerte Säge 20, mit welcher der kontinuierlich laufende Faserverbundstab 1 automatisch in einzelne Stababschnitte 21, die jeweils die für die Bewehrungselemente gewünschte Länge haben, zertrennt wird (Schritt G).

Die so erhaltenen Stababschnitte 21 werden in einem Magazin 22 zwischengelagert (Schritt H). Sie haben jeweils zwei noch umformbare weiche Bereiche 13 und drei daran angrenzende bereits in der zweiten Härtungsstufe 15 ausgehärtete Bereiche 14. Zusätzlich können hier beispielsweise auch nicht zeichnerisch dargestellte vollständig ausgehärtete gerade Bewehrungselemente oder auch in anderer Anordnung in weiche und harte Bereiche aufgeteilte Bewehrungselemente abgetrennt und separat gelagert bzw. zwischengelagert werden.

Nach der Zwischenlagerung in dem Magazin 22 werden die einzelnen Stababschnitte 21 in einer Umformeinrichtung 23 in die für die Bewehrungselemente 2 gewünschte bügelförmige Gestalt gebracht (Schritt I). Dazu werden die Stababschnitte 21 bei dem hier dargestellten Ausführungsbeispiel in jeweils zwei noch weichen Bereichen 13 mit Hilfe von zwei Umformrollen 24 um jeweils 90° zu einem Bewehrungsbügel umgeformt. Die beiden hier umgeformten Bereiche 13 befinden sich dabei jeweils zwischen je zwei bereits in der zweiten Härtungsstufe 15 ausgehärteten Bereichen 14.

Abschließend werden die umgeformten Stababschnitte 20 in einer abschließenden Härtungsstufe 25 durch Zufuhr von Wärme eines Verbrennungsprozesses auch in den bisher noch weichen Bereichen 13 ausgehärtet, um so die nun insgesamt fertig ausgehärteten Bewehrungselemente 22 zu erhalten (Schritt J).

## Patentansprüche

1. Verfahren zur Herstellung eines aus faserverstärktem Kunststoff bestehenden Bewehrungselements (2) für mineralische Baustoffe, insbesondere für Beton, umfassend die folgenden Verfahrensschritte:
- eine Vielzahl von Fasern (3) wird mit Kunststoff getränkt,
- die mit Kunststoff umgebenen Fasern (5b) werden in einer ersten Härtungsstufe (7) durch Zufuhr von Wärme und/oder Strahlung zu einem Faserverbundstab (1) vorgehärtet,
- der Faserverbundstab (1) wird gegebenenfalls auf die für die Bewehrungselemente (2) gewünschte Länge abgelängt,
- der vorgehärtete Faserverbundstab (1) wird in eine für das Bewehrungselement (2) gewünschte Form gebracht,
- der Faserverbundstab (1) wird in einer abschließenden Härtungsstufe (25) durch Zufuhr von Wärme und/oder Strahlung ausgehärtet,
**dadurch gekennzeichnet,**
**dass** die Härtung des Faserverbundstabs (1) in mindestens drei nacheinander ablaufenden Härtungsstufen (7, 16, 25) erfolgt,
**dass** nach der ersten Härtungsstufe (7) über mindestens einen einzelnen Abschnitt (13) des Faserverbundstabs (1) mindestens ein strahlungsreflektierendes und/oder wärmeisolierendes Abdeckmittel (15) auf den vorgehärteten Faserverbundstab (1) aufgebracht wird, welches den Faserverbundstab (1) in diesem mindestens einen Abschnitt (13) zumindest über einen Teilbereich seines Umfangs abdeckt,
wobei eine zweite Härtungsstufe (16) des Faserverbundstabs (1) zusammen mit dem/den abschnittsweise aufgebrachten Abdeckmittel(n) (15) durchgeführt wird, in welcher der Faserverbundstab (1) durch Zufuhr von Wärme und/oder Strahlung in den nicht von einem Abdeckmittel (15) abgedeckten Bereichen (14) weiter härtet,
und **dass** das Verformen (23) des Faserverbundstabs (1) zwischen der zweiten Härtungsstufe (16) und der abschließenden Härtungsstufe (25) durchgeführt wird.

2. Verfahren nach Anspruch 1, **dadurch gekennzeichnet, dass** der vorgehärtete Faserverbundstab (1) in den Bereichen (13) verformt wird, die in der zweiten Härtungsstufe (16) von einem Abdeckmittel (15) abgedeckt werden.

3. Verfahren nach Anspruch 1 oder 2, **dadurch gekennzeichn e t ,** dass die Abdeckmittel (15) mechanisch und/oder flüssig aufgebracht werden.

4. Verfahren nach einem der Ansprüche 1 bis 3, **dadurch gekennzeichnet, dass** die Abdeckmittel (15) wärmereflektierende und/oder strahlungsreflektierende, vorgeformte Profilteile umfassen, in denen die einzelnen Abschnitte des vorgehärteten Faserverbundstabs (1) vorzugsweise formschlüssig einliegen.

5. Verfahren nach einem der vorherigen Ansprüche, **dadurch gekennzeichnet, dass** die Abdeckmittel (15) eine wärmereflektierende und/oder strahlungsreflektierende Folie, insbesondere Alufolie, umfassen, die um die einzelnen Abschnitte (13) des vorgehärteten Faserverbundstabs (1) gewickelt wird.

6. Verfahren nach einem der vorherigen Ansprüche, **dadurch gekennzeichnet, dass** die Abdeckmittel (15) nach dem Durchführen der zweiten Härtungsstufe (16) zumindest teilweise wieder entfernt werden.

7. Verfahren nach einem der vorherigen Ansprüche, **dadurch gekennzeichnet, dass** die Abdeckmittel (15) Farbe oder Lack umfassen, die bzw. der als wärmereflektierender und/oder strahlungsreflektierender Überzug auf einzelne Abschnitte (13) des vorgehärteten Faserverbundstabs (1) aufgebracht wird.

8. Verfahren nach Anspruch 7, **dadurch gekennzeichnet, dass** Silberbronze oder ein Metalliclack auf die einzelnen Abschnitte (13) des vorgehärteten Faserverbundstabs (1) aufgesprüht wird.

9. Verfahren nach einem der vorherigen Ansprüche, **dadurch gekennzeichnet, dass** die Abdeckmittel (15) eine gel-artige oder wachs-artige Beschichtung umfassen, die als wärmereflektierender und/oder strahlungsreflektierender Überzug auf die einzelnen Abschnitte (13) des vorgehärteten Faserverbundstabs (1) aufgebracht wird.

10. Verfahren nach einem der vorherigen Ansprüche, **dadurch gekennzeichnet, dass** als Abdeckmittel (15) strahlungsreflektierende und wärmedurchlässige Reflektionsmittel aufgebracht werden, wobei der Faserverbundstab (1) in der zweiten Härtungsstufe (16) durch Einbringung von Strahlungsenergie (18) nur in den nicht von Reflektionsmitteln (15) abgedeckten Bereichen (14) weiter gehärtet wird, und wobei der Faserverbundstab (1) in der abschließenden Härtungsstufe (25) unter Anwendung von Wärme auch in den von den Reflektionsmitteln (15) abgedeckten Bereichen (13) ausgehärtet wird.

11. Verfahren nach einem der vorherigen Ansprüche, **dadurch gekennzeichnet, dass** die Oberfläche des vorgehärteten Faserverbundstabs (1) vor dem Aufbringen der Abdeckmittel (15) profiliert wird.

12. Verfahren nach Anspruch 11, **dadurch gekennzeichnet, dass** mindestens ein Faserstrang (9) schraubenförmig um den vorgehärteten Faserverbundstab (1) gewickelt wird, so dass die Oberfläche des Faserverbundstabs (1) eingeschnürte Bereiche und dazwischen liegende Rippen mit einer gewindeförmige Oberflächenstruktur (10) aufweist.

13. Verfahren nach einem der vorherigen Ansprüche, **dadurch gekennzeichnet, dass** die Oberfläche des Faserverbundstabs (1) mit Pulver oder Sand beschichtet wird.

14. Verfahren nach einem der vorherigen Ansprüche, **dadurch gekennzeichnet, dass** das Bewehrungselement (2) aus einem durch Pultrusion erzeugten Faserverbundstab (1) gefertigt wird, der zumindest über einen bestimmten Zeitraum hinweg endlos hergestellt und vor dem Umformen (23) auf die für die Bewehrungselemente (2) gewünschte Länge abgelängt wird, wobei die zweite Härtungsstufe (16) mit abschnittsweise auf den Faserverbundstab (1) aufgebrachten Abdeckmitteln (15) durchlaufen wird.

15. Verfahren nach Anspruch 14, **dadurch gekennzeichnet, dass** das Ablängen (20) und das Verformen (23) der FaserverbundStababschnitte (21) zwischen der zweiten Härtungsstufe (16) und der abschließenden Härtungsstufe (25) erfolgt.

16. Bewehrungselement (2) aus faserverstärktem Kunststoff für mineralische Baustoffe, insbesondere für Beton, **dadurch gekennzeichnet, dass** es unter Anwendung des Verfahrens nach einem der vorherigen Ansprüche hergestellt ist.

17. Bewehrungselement (2) nach Anspruch 16, **dadurch gekennzeichnet, dass** es in der Form eines Bügels mit mindestens einem vorzugsweise um 90° umgeformten Biegebereich ausgeführt ist.

## Claims

1. A method for producing a reinforcement element (2) consisting of fiber-reinforced plastic for mineral construction materials, particularly for concrete, with said method comprising the following steps:
- impregnating a plurality of fibers (3) with plastic,
- pre-curing the fibers (5b) enclosed with plastic into a composite fiber rod (1) in a first curing stage (7) by supplying heat and/or radiation,
- cutting the composite fiber rod (1), if necessary, to the length desired for the reinforcement elements (2),
- forming the pre-cured composite fiber rod (1) into a shape desired for the reinforcement element (2), and
- curing the composite fiber rod (1) in a final curing stage (25) by supplying heat and/or radiation,
**characterized in**
**that** the curing of the composite fiber rod (1) takes place in at least three successive curing stages (7, 16, 25), in
**that** at least one radiation-reflecting and/or heat-insulating covering means (15) is after the first curing stage (7) applied on the pre-cured composite fiber rod (1) over at least one individual section (13) of the composite fiber rod (1) and covers the composite fiber rod (1) over at least part of its circumference in this at least one section (13),
wherein a second curing stage (16) of the composite fiber rod (1) is carried out together with the one or more sectionally applied covering means (15), and wherein the composite fiber rod (1) additionally cures in the sections (14), which are not covered with a covering means (15), in said second curing stage due to the supply of radiation and/or heat, and in
**that** the deformation (23) of the composite fiber rod (1) is carried out between the second curing stage (16) and the final curing stage (25).

2. The method according to claim 1, **characterized in that** the pre-cured composite fiber rod (1) is deformed in the sections (13), which are covered with a covering means (15) in the second curing stage (16).

3. The method according to claim 1 or 2, **characterized in that** the covering means (15) are applied mechanically and/or in liquid form.

4. The method according to one of claims 1-3, **characterized in that** the covering means (15) comprise preformed heat-reflecting and/or radiation-reflecting profile parts, in which the individual sections of the pre-cured composite fiber rod (1) preferably lie in a form-fitting fashion.

5. The method according to one of the preceding claims, **characterized in that** the covering means (15) comprise a heat-reflecting and/or radiation-reflecting foil, particularly aluminum foil, which is wrapped around the individual sections (13) of the pre-cured composite fiber rod (1).

6. The method according to one of the preceding claims, **characterized in that** the covering means (15) are at least partially removed again after the second curing stage (16) has been carried out.

7. The method according to one of the preceding claims, **characterized in that** the covering means (15) comprise paint or lacquer, which is applied on individual sections (13) of the pre-cured composite fiber rod (1) in the form of a heat-reflecting and/or radiation-reflecting coating.

8. The method according to claim 7, **characterized in that** silver bronze or a metallic lacquer is sprayed on the individual sections (13) of the pre-cured composite fiber rod (1).

9. The method according to one of the preceding claims, **characterized in that** the covering means (15) comprise a gel-like or wax-like coating material, which is applied on the individual sections (13) of the pre-cured composite fiber rod (1) in the form of a heat-reflecting and/or radiation-reflecting coating.

10. The method according to one of the preceding claims, **characterized in that** radiation-reflecting and diathermic reflection means are applied as covering means (15), wherein the composite fiber rod (1) is in the second curing stage (16) only additionally cured in the sections (14), which are not covered with reflection means (15), due to the input of radiation energy (18), and wherein the composite fiber rod (1) is in the final curing stage (25) also cured in the sections (13), which are covered with reflection means (15), due to the input of heat.

11. The method according to one of the preceding claims, **characterized in that** the surface of the pre-cured composite fiber rod (1) is profiled prior to the application of the covering means (15).

12. The method according to claim 11, **characterized in that** at least one fiber strand (9) is helically wound around the pre-cured composite fiber rod (1) such that the surface of the composite fiber rod (1) features constricted sections and intermediate ribs with a thread-like surface structure (10).

13. The method according to one of the preceding claims, **characterized in that** the surface of the composite fiber rod (1) is coated with powder or sand.

14. The method according to one of the preceding claims, **characterized in that** the reinforcement element (2) is made of a composite fiber rod (1) produced by means of pultrusion, wherein said composite fiber rod is produced in an endless fashion at least over a certain period of time and cut to the length desired for the reinforcement elements (2) prior to its deformation (23), and wherein the second curing stage (16) is carried out with covering means (15) sectionally applied on the composite fiber rod (1).

15. The method according to claim 14, **characterized in that** composite fiber rod sections (21) are cut to length (20) and deformed (23) between the second curing stage (16) and the final curing stage (25).

16. A reinforcement element (2) consisting of fiber-reinforced plastic for minimal construction materials, particularly for concrete, **characterized in that** the reinforcement element is produced with a method according to one of the preceding claims.

17. The reinforcement element (2) according to claim 16, **characterized in that** the reinforcement element is realized in the form of a stirrup with at least one bent section, which is preferably deformed by 90°.

## Revendications

1. Procédé de fabrication d'un élément d'armature (2) composé de matière plastique renforcé avec des fibres pour matériaux de construction minéraux, en particulier de béton, comprenant les étapes de procédé suivantes :
- une pluralité de fibres (3) est imprégnée de matière plastique,
- les fibres (5b) entourées de plastique sont prédurcies dans une première phase de durcissement (7) par apport de chaleur et/ou rayonnement à une tige composite renforcée avec des fibres (1),
- la tige composite renforcée avec des fibres (1) est mise à longueur le cas échéant à la longueur souhaitée pour les éléments d'armature (2),
- la tige composite renforcée avec des fibres (1) prédurcie est mise dans une forme souhaitée pour l'élément d'armature (2),
- la tige composite renforcée avec des fibres (1) est durcie dans une phase de durcissement consécutive (25) par apport de chaleur et/ou rayonnement,
**caractérisé en ce que,**
le durcissement de la tige composite renforcée avec des fibres (1) a lieu dans au moins trois phases de durcissement (7, 16, 25) se déroulant l'une après l'autre,
**en ce qu'**après la première phase de durcissement (7) au moins un agent de couverture (15) réfléchissant le rayonnement et/ou thermoisolant est appliqué à la tige composite renforcée avec des fibres (1) prédurcie sur au moins un tronçon (13) de la tige composite renforcée avec des fibres (1), lequel recouvre la tige composite renforcée avec des fibres (1) dans au moins ce tronçon (13) au moins sur une zone partielle de sa périphérie,
une deuxième phase de durcissement (16) de la tige composite renforcée avec des fibres (1) étant exécutée avec le(s) agent(s) de couverture (15) appliqué(s) par tronçon, dans laquelle la tige composite renforcée avec des fibres (1) continue à durcir par apport de chaleur et/ou rayonnement dans les zones non recouvertes (14) par un agent de couverture (15),
et **en ce que** la mise en forme (23) de la tige composite renforcée avec des fibres (1) est exécutée entre la deuxième phase de durcissement (16) et la phase de durcissement consécutive (25).

2. Procédé selon la revendication 1, **caractérisé en ce que** la tige composite renforcée avec des fibres prédurcie (1) est formée dans les zones (13) qui sont couvertes d'un agent de couverture (15) au cours de la deuxième phase de durcissement (16).

3. Procédé selon la revendication 1 ou 2, **caractérisé en ce que** l'agent de couverture (15) est appliqué de façon mécanique et/ou fluide.

4. Procédé selon l'une quelconque des revendications 1 à 3, **caractérisé en ce que** les agents de couverture (15) comprennent des pièces profilées formées thermo-réfléchissantes et/ou réfléchissant le rayonnement dans lesquelles les tronçons individuels de la tige composite renforcée avec des fibres (1) prédurcie pénètrent de préférence par conformité de forme.

5. Procédé selon l'une quelconque des revendications précédentes, **caractérisé en ce que** les agents de couverture (15) comprennent une feuille thermo-réfléchissante et/ou réfléchissant le rayonnement, en particulier une feuille d'aluminium qui est enroulée autour des tronçons individuels (13) de la tige composite renforcée avec des fibres (1) prédurcie.

6. Procédé selon l'une quelconque des revendications précédentes, **caractérisé en ce que** les agents de couverture (15) sont au moins en partie à nouveau enlevés après l'exécution de la deuxième phase de durcissement (16).

7. Procédé selon l'une quelconque des revendications précédentes, **caractérisé en ce que** les agents de couverture (15) comprennent de la peinture ou du verni, qui est appliqué en tant que revêtement thermo-réfléchissant et/ou réfléchissant le rayonnement sur les tronçons individuels (13) de la tige composite renforcée avec des fibres (1) prédurcie.

8. Procédé selon la revendication 7, **caractérisé en ce que** du pigment d'argent moulu ou un verni métallique est pulvérisé sur les tronçons individuels (13) de la tige composite renforcée avec des fibres (1) prédurcie.

9. Procédé selon l'une quelconque des revendications précédentes, **caractérisé en ce que** les agents de couverture (15) comprennent un revêtement ressemblant à du gel ou à de la cire, qui est appliqué en tant que revêtement thermo-réfléchissant et/ou réfléchissant le rayonnement sur les tronçons individuels (13) de la tige composite renforcée avec des fibres (1) prédurcie.

10. Procédé selon l'une quelconque des revendications précédentes, **caractérisé en ce que** des moyens de réflexion réfléchissant le rayonnement et laissant passer la chaleur sont appliqués en tant qu'agents de couverture (15), la tige composite renforcée avec des fibres (1) continuant à être durcie au cours de la deuxième phase de durcissement (16) en introduisant de l'énergie rayonnante (18) uniquement dans les zones (14) non recouvertes par les agents de réflexion (15) et la tige composite renforcée avec des fibres (1) étant complètement durcie au cours de la phase de durcissement consécutive (25) en utilisant de la chaleur même dans les zones (13) recouvertes par les agents de couverture (15).

11. Procédé selon l'une quelconque des revendications précédentes, **caractérisé en ce que** la surface de la tige composite renforcée avec des fibres (1) prédurcie est profilée avant l'application des agents de couverture (15).

12. Procédé selon la revendication 11, **caractérisé en ce qu**'au moins un stratifil (9) est enroulé de manière hélicoïdale autour de la tige composite renforcée avec des fibres (1) prédurcie de sorte que la surface de la tige composite renforcée avec des fibres (1) comporte des zones rétreintes et des nervures situées entre elles avec une structure superficielle en forme de filetage (10).

13. Procédé selon l'une quelconque des revendications précédentes, **caractérisé en ce que** la surface de la tige composite renforcée avec des fibres (1) est enduite de poudre ou de sable.

14. Procédé selon l'une quelconque des revendications précédentes, **caractérisé en ce que** l'élément d'armature (2) est élaboré à partir d'une tige composite renforcée avec des fibres (1) produite par pultrusion qui est fabriquée sans fin sur une certaine période de temps et est mise à longueur avant la déformation (23) à la longueur souhaitée pour les éléments d'armature (2), la deuxième phase de durcissement (16) se déroulant avec des agents de couverture (15) appliqués par tronçons sur la tige composite renforcée avec des fibres (1).

15. Procédé selon la revendication 14, **caractérisé en ce que** la mise à longueur (20) et la mise en forme (23) des sections de tige composite renforcée avec des fibres (21) a lieu entre la deuxième phase de durcissement (16) et la phase de durcissement consécutive (25).

16. Elément d'armature (2) en matière plastique renforcée avec des fibres pour des matériaux de construction minéraux, en particulier du béton **caractérisé en ce qu**'il est fabriqué en utilisant le procédé selon l'une quelconque des revendications précédentes.

17. Elément d'armature (2) selon la revendication 16, **caractérisé en ce qu**'il est exécuté sous la forme d'un étrier avec au moins une zone de pliage formée de préférence à 90°.
